(19) Europäisches Patentamt
European Patent Office
Office européen des brevets

(11) **EP 3 640 290 B1**

(12) **EUROPEAN PATENT SPECIFICATION**

(45) Date of publication and mention
of the grant of the patent:
**13.04.2022 Bulletin 2022/15**

(21) Application number: **18817584.8**

(22) Date of filing: **06.06.2018**

(51) International Patent Classification (IPC):
**C08L 7/00** (2006.01)    **B60C 1/00** (2006.01)
**C08K 3/04** (2006.01)    **C08K 3/36** (2006.01)
**C08K 5/10** (2006.01)    **C08L 15/00** (2006.01)

(52) Cooperative Patent Classification (CPC):
(C-Sets available)
**B60C 1/00; C08K 3/04; C08K 3/36; C08K 5/10;
C08L 7/00; C08L 9/00;** Y02T 10/86      (Cont.)

(86) International application number:
**PCT/JP2018/021642**

(87) International publication number:
**WO 2018/230406 (20.12.2018 Gazette 2018/51)**

(54) **RUBBER COMPOSITION FOR TIRE TREAD, AND TIRE**

KAUTSCHUKZUSAMMENSETZUNG FÜR REIFENPROFIL UND REIFEN

COMPOSITION DE CAOUTCHOUC POUR BANDE DE ROULEMENT DE PNEU ET PNEU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.06.2017 JP 2017118323**

(43) Date of publication of application:
**22.04.2020 Bulletin 2020/17**

(73) Proprietor: **Bridgestone Corporation
Tokyo 104-8340 (JP)**

(72) Inventor: **KAJIKI, Ryo
Tokyo 104-8340 (JP)**

(74) Representative: **Oxley, Robin John George
Marks & Clerk LLP
15 Fetter Lane
London EC4A 1BW (GB)**

(56) References cited:
EP-A1- 3 138 874        EP-A1- 3 159 376
WO-A1-2014/098155       WO-A1-2014/185545
WO-A1-2015/166997       WO-A1-2015/182779
WO-A1-2015/194591       WO-A1-2016/139915
WO-A1-2016/139915       WO-A1-2016/139916
WO-A1-2016/139935       WO-A1-2016/140217
JP-A- 2015 168 726      JP-A- 2015 232 071
JP-A- 2016 006 153      JP-A- 2016 006 169
JP-A- 2016 108 421      JP-A- 2016 160 418
JP-A- 2016 160 422      JP-A- 2016 160 423
JP-A- 2016 160 424

(52) Cooperative Patent Classification (CPC): (Cont.)

C-Sets
**C08L 7/00**

## Description

Technical Field

The present invention relates to a rubber composition for tire tread, and tire.

Background Art

Recently, with a social demand for energy saving and natural resources saving, tires having a small rolling resistance have become desired for improving fuel economy of cars. For such a demand, as a means for reducing the rolling resistance of tires, there is known a method of using a rubber composition having a reduced hysteresis loss, that is, a rubber composition having a low heat generation property in which the amount of carbon black to be used is reduced or a low-grade carbon black is used, as a tire member, especially as a tread rubber.
However, mere reduction in the amount of carbon black to be used may worsen the abrasion resistance of the rubber composition.
As opposed to this, PTLs 1 and 2 propose a rubber composition using a modified conjugated dienic polymer with an amino group introduced into the polymerization active terminal as a rubber component and using carbon black as a filler, for reducing rolling resistance thereof. PTLs 3 and 4 disclose a rubber composition capable of satisfying both abrasion resistance and rolling resistance of tires where a terminal modified polymer such as a terminal modified polybutadiene rubber or the like is used for improving the dispersibility of carbon black therein.

Citation List

Patent Literature

PTL 1: JP 8-225604 A
PTL 2: JP 8-231658 A
PTL 3: JP 2005-041975 A
PTL 4: JP 2013-155256 A

Summary of Invention

Technical Problem

In general, for improving abrasion resistance of tires, the particle size and the structure of carbon black to be mixed in a rubber composition to constitute tires are considered to be predominant factors, and it is known that reducing the particle size of carbon black could improve abrasion resistance, but when the particle size of carbon black is extremely small, the carbon black may undergo dispersion failure in rubber so that the heat generation property of the rubber composition is thereby increased. When a tire using such a rubber composition as tread is produced, the abrasion resistance thereof may be excellent but the fuel economy performance thereof is poor. Specifically, regarding the particle size of carbon black, abrasion resistance and low heat generation property are in an antinomic relationship.
From the above-mentioned viewpoint, the above-mentioned rubber composition using a terminal modified polymer as a rubber component reduces the heat generation property (hysteresis loss) of the terminal modified polymer, and therefore the rubber composition of the type is effective in some degree for abrasion resistance and rolling resistance but still has some room for improvement in point of the above-mentioned two antinomic characteristics.
The present invention has been made under the situation as above, and its object is to provide a rubber composition for tire tread capable of providing a tread excellent in a balance of rolling resistance reduction, abrasion resistance, tear resistance and cut resistance, and to provide a tire excellent in a balance of rolling resistance reduction, abrasion resistance, tear resistance and cut resistance.

Solution to Problem

The present inventors have made assiduous studies for the purpose of solving the above-mentioned problems and, as a result, have found that a rubber composition for tire tread that contains a rubber component containing a polymer having an affinity for a filler, a small amount of silica and a glycerin fatty acid ester composition can solve the above-mentioned problems. The present invention has been completed on the basis of these findings. Specifically, the present invention is as described below.
<1> A rubber composition for tire tread, containing a rubber component containing from 60 to 80% by mass of a natural rubber and from 20 to 40% by mass of a modified conjugated dienic polymer having one or more functional groups each having an atom other than carbon and hydrogen, a filler in an amount of 35 to 70 parts by mass per 100 parts by mass of the rubber component, and a glycerin fatty acid ester composition in an amount of 0.1 to 10 parts by mass per 100 parts by mass of the rubber component, wherein the content of silica in the filler is from 3 to 30% by mass.

<2> The rubber composition for tire tread according to <1>, further containing a fatty acid metal salt in an amount of 0.1 to 5 parts by mass per 100 parts by mass of the rubber component.

<3> The rubber composition for tire tread according to <1> or <2>, wherein the filler contains a carbon black having a dibutyl phthalate absorption amount (DBP absorption amount) of 40 to 180 cm$^3$/100 g, a nitrogen adsorption specific surface area (N$_2$SA) of 40 to 95 m$^2$/g, a toluene extract light transmittance of 90% or more and a hydrogen release rate of 0.37% by mass or more.

<4> The rubber composition for tire tread according to any one of <1> to <3>, wherein the glycerin fatty acid ester composition contains a glycerin fatty acid monoester and a glycerin fatty acid diester that are esters of glycerin and a fatty acid having 8 to 28 carbon atoms, and the glycerin fatty acid monoester content is 85% by mass or less.

<5> The rubber composition for tire tread according to any one of <1> to <3>, wherein the glycerin fatty acid ester composition contains a glycerin fatty acid ester that is an ester of glycerin and two kinds of fatty acids, and in the fatty acid component of a fatty acid-derived site of the glycerin fatty acid ester, the content of the fatty acid component that accounts for the largest amount among all the fatty acid components of the entire glycerin fatty acid ester is from 10 to 90% by mass, and the content of the glycerin fatty acid monoester in the glycerin fatty acid ester composition is from 50 to 100% by mass.

<6> The rubber composition for tire tread according to any one of <1> to <5>, wherein the modified conjugated dienic polymer having one or more functional groups each having an atom other than carbon and hydrogen is a modified conjugated dienic polymer having one or more functional groups each having at least one of nitrogen, oxygen and silicon atoms.

<7> A tire using a rubber composition for tire tread of any one of <1> to <6> as a tread thereof.

Advantageous Effects of Invention

According to the present invention, there can be provided a rubber composition for tire tread capable of providing a tread excellent in a balance of rolling resistance reduction, abrasion resistance, tear resistance and cut resistance, and a tire excellent in a balance of rolling resistance reduction, abrasion resistance, tear resistance and cut resistance.

Description of Embodiments

<Rubber Composition for Tire Tread>

The rubber composition for tire tread of the present invention contains a rubber component containing 60 to 80% by mass of a natural rubber and 20 to 40% by mass of a modified conjugated dienic polymer having one or more functional groups each having an atom other than carbon and hydrogen, a filler in an amount of 35 to 70 parts by mass per 100 parts by mass of the rubber component, and a glycerin fatty acid ester composition in an amount of 0.1 to 10 parts by mass per 100 parts by mass of the rubber component, wherein the content of silica in the filler is 3 to 30% by mass.

In general, a glycerin fatty acid ester composition is used in a rubber composition that contains a large amount of silica as a filler therein (for example, in an amount of 50 parts by mass or more per 100 parts by mass of the rubber component in the rubber composition). On the other hand, any other filler than silica, for example, carbon black poorly interacts with a glycerin fatty acid ester composition, and therefore, even when a rubber composition not containing silica contains carbon black and a glycerin fatty acid ester composition, the composition could not attain the effect that is anticipated to be attained by a system containing silica.

In the present invention, the silica amount contained in the rubber composition for tire tread is smaller than usual. Specifically, in a filler in an amount of 35 to 70 parts by mass per 100 parts by mass of a rubber component, the amount of silica is 3 to 30% by mass in the filler, and is at most 21 parts by mass per 100 parts by mass of the rubber component. In general, when a rubber composition contains only silica in an amount of 21 parts by mass per 100 parts by mass of the rubber component therein, the rubber component could not be sufficiently reinforced and the composition could not have various properties such as abrasion resistance.

However, the rubber composition for tire tread of the present invention contains along with a small amount of silica, a filler that poorly interacts with a glycerin fatty acid ester composition, and a specific rubber component, and can provide a tread excellent in a balance of rolling resistance reduction, abrasion resistance, tear resistance and cut resistance.

Though not clear, the reason is presumed to be as follows.

For example, in a case where carbon black is used as a filler except silica, carbon black is generally contained in a rubber composition as an aggregate, but silica dispersed by a glycerin fatty acid ester composition may infiltrate a mass of carbon black and the dispersed silica can act as a dispersant for carbon black, and accordingly carbon black in the rubber composition can be readily dispersed therein. As a result, it is considered that the tread obtained from the rubber composition can be excellent in durability such as abrasion resistance, tear resistance and cut resistance, and the tire produced using the tread can be excellent also in rolling resistance.

Hereinunder details of the rubber composition for tire tread and the tire of the present invention are described.

[Rubber Component]

The rubber composition for tire tread of the present invention contains a rubber component containing 60 to 80% by mass of a natural rubber and 20 to 40% by mass of a modified conjugated dienic polymer having one or more functional groups each having an atom other than carbon and hydrogen.

Hereinunder "modified conjugated dienic polymer having one or more functional groups each having an atom other than carbon and hydrogen" may be referred to as "modified conjugated dienic polymer in the present invention".

When the content of the natural rubber in the rubber component is less than 60% by mass, the tread produced from the rubber composition for tire tread is poor in resiliency and is not excellent in tear resistance and tire rolling resistance. On the other hand, when the content of the natural rubber in the rubber component is more than 80% by mass, the resultant tread may lose abrasion resistance and cut resistance.

The modified conjugated dienic polymer in the present invention is excellent in affinity for the filler contained in the rubber composition for tire tread of the present invention. When the content of the modified conjugated dienic polymer in the rubber component is less than 20% by mass, the filler could hardly disperse in the rubber composition and the rubber component could not be reinforced, and accordingly the tread obtained from the rubber composition for tire tread of the present invention may lose abrasion resistance and cut resistance. When the content of the modified conjugated dienic polymer in the rubber component is more than 40% by mass, the tread is not excellent in tear resistance and tire rolling resistance.

The rubber component may contain any other rubber or polymer than a natural rubber and the above-mentioned modified conjugated dienic polymer.

From the above-mentioned viewpoint, the content of the natural rubber in the rubber component is preferably 62 to 80% by mass, more preferably 65 to 78% by mass. The content of the modified conjugated dienic polymer of the present invention in the rubber component is preferably 20 to 38% by mass, more preferably 22 to 35% by mass.

(Natural Rubber)

The natural rubber for use in the rubber component in the present invention is not specifically limited, and the natural rubber latex to be a raw material is not also specifically limited. The natural rubber latex includes a field latex, and a commercially-available latex.

The natural rubber for use in the rubber component in the present invention is preferably a partially deproteinized natural rubber obtained from a partially deproteinized latex according to a mechanical separation method of removing a protein from a natural rubber latex, and the total nitrogen content in the partially deproteinized natural rubber is preferably more than 0.1% by mass and 0.4% by mass or less.

More preferably, the mechanical separation method for partial deproteinization is a centrifugal concentration method from the viewpoint of easiness in controlling the total nitrogen content in the natural rubber.

This is because in the case where deproteinization is carried out according to a method different from a mechanical separation method, for example, according to a proteolytic method using a protease, or a method of repeated washing with a surfactant, or a method of using both an enzyme and a surfactant, the protein in a solid rubber may decrease, but at the same time, an active ingredient such as tocotrienol having an antiaging effect may also be lost, and therefore the antiaging performance intrinsic to natural rubber may reduce.

The total nitrogen content in the natural rubber in the present invention is an index of a protein content therein, and by controlling the condition for centrifugal separation (e.g., rotation speed, time) of a raw material natural rubber latex, the content can be controlled, and preferably, the content is so controlled that the total nitrogen content in the resultant natural rubber product could be more than 0.1% by mass and 0.4% by mass or less. The condition for centrifugal separation is not specifically limited, but preferably, for example, centrifugal separation is repeated a few times at a rotation speed of 7500 rpm or so. When the total nitrogen content is 0.1% by mass or less, heat-resistant antiaging performance may lower, and when the total nitrogen content is more than 0.4% by mass, a sufficient low-heat generation property (sufficient heat generation-reducing effect) could not be attained. Specifically, controlling the total nitrogen content in the solid fraction in a centrifugally-separated concentrated latex to be more than 0.1% by mass and 0.4% by mass or less followed by solidification and drying gives a natural rubber having a reduced protein content and having an improved low-heat generation property. More preferably, the total nitrogen content falls within a range of 0.25 to 0.38% by mass, even more preferably 0.25 to 0.35% by mass.

In such a partial deproteinization condition, surprisingly, the active ingredient as an antiaging agent such as tocotrienol is not almost lost, and therefore the heat resistance of the thus-deproteinized rubber can be almost on the same level as that of already-existing natural rubber.

The partially deproteinized natural rubber latex is solidified and washed, and then dried using an ordinary drier such as a vacuum drier, an air drier or a drum drier to give a preferred natural rubber for use in the present invention.

(Modified Conjugated Dienic Polymer)

The modified conjugated dienic polymer in the present invention has one or more functional groups each having an atom other than carbon and hydrogen.

The atom other than carbon and hydrogen atoms is preferably one or more atoms selected from a nitrogen atom, an oxygen atom, a sulfur atom, a semi-metal atom and a metal atom. Here, the semimetal atom is preferably one or more atoms selected from boron, silicon, germanium, arsenic, antimony and tellurium, more preferably one or more atoms selected from boron, silicon and germanium, and especially preferably silicon. The metal atom is preferably one or more atoms selected from tin, titanium, zirconium, bismuth and aluminum, more preferably one or more atoms selected from tin and titanium, and especially preferably tin.

The functional group having an atom other than carbon and hydrogen is a residue of a compound having an atom other than carbon and hydrogen. A compound having an atom other than carbon and hydrogen may react with the active terminal of a conjugated dienic polymer as a modifier to form a modified conjugated dienic polymer, or a nitrogen-containing compound as a compound having an atom other than carbon and hydrogen may react with an alkali metal to form a polymerization initiator for anionic polymerization, thereby producing a modified conjugated dienic polymer that has a nitrogen-containing compound residue at the initiation terminal of a conjugated dienic polymer.

The modifier that reacts with the active terminal of a conjugated dienic polymer includes one or more modifiers selected from a tin compound, a nitrogen and silicon-containing compound, an oxygen and silicon-containing compound, a sulfur and silicon-containing compound and a nitrogen-containing compound to be mentioned hereinunder.

Preferred examples of the tin compound include one or more tin compounds selected from tin tetrachloride and tributyltin chloride. Preferred examples of the nitrogen and silicon-containing compound include silane compounds having a protected primary amino group that are selected from N,N-bis(trimethylsilyl)aminopropylmethyldimethoxysilane, 1-trimethylsilyl-2,2-dimethoxy-1-aza-2-silacyclopentane, N,N-bis (trim ethylsilyl) aminopropyltrimethoxysilane, N,N-bis (trimethylsilyl) aminopropyltriethoxysilane, N,N-bis(trimethylsilyl)aminopropylmethyldiethoxysilane, N,N-bis(trimethylsilyl)aminoethyltrimethoxysilane, N,N-bis(trimethylsilyl)aminoethyltriethoxysilane, N,N-bis(trimethylsilyl)aminoethylmethyldimethoxysilane and N,N-bis(trimethylsilyl)aminoethylmethyldiethoxysilane; and preferred examples thereof also include silane compounds having a protected secondary amino group that are selected from N-methyl-N-trimethylsilylaminopropyl(methyl)dimethoxysilane, N-methyl-N-trimethylsilylaminopropyl(methyl)diethoxysilane, N-trimethylsilyl(hexamethyleneimin-2-yl)propyl(methyl)dimethoxysilane, N-trimethylsilyl(hexamethyleneimin-2-yl)propyl(methyl)diethoxysilane, N-trimethylsilyl(pyrrolidin-2-yl)propyl(methyl)dimethoxysilane, N-trimethylsilyl(pyrrolidin-2-yl)propyl(methyl)diethoxysilane, N-trimethylsilyl(piperidin-2-yl)propyl(methyl)dimethoxysilane, N-trimethylsilyl(piperidin-2-yl)propyl(methyl)diethoxysilane, N-trimethylsilyl(imidazol-2 -yl)propyl(methyl)dimethoxysilane, N-trimethylsilyl(imidazol-2-yl)propyl(methyl)diethoxysilane, N-trimethylsilyl(4,5-dihydroimidazol-5-yl)propyl(methyl)dimethoxysilane and N-trimethylsilyl(4,5-dihydroimidazol-5-yl)propyl(methyl)diethoxysilane.

Preferred examples of the oxygen and silicon-containing compound include one or more kinds of epoxy group-containing hydrocarbyloxysilane compounds selected from 2-glycidoxyethyltrimethoxysilane, 2-glycidoxyethyltriethoxysilane, (2-glycidoxyethyl)methyldimethoxysilane, 3-glycidoxypropyltrimethoxysilane, 3-glycidoxypropyltriethoxysilane, (3-glycidoxypropyl)methyldimethoxysilane, 2-(3,4-epoxycyclohexyl)ethyltrimethoxysilane, 2-(3,4-epoxycyclohexyl)ethyltriethoxysilane and 2-(3,4-epoxycyclohexyl)ethyl(methyl)dimethoxysilane; and preferred examples of the sulfur and silicon-containing compound include thioepoxy group-containing hydrocarbyloxysilane compounds derived from the above-mentioned epoxy group-containing hydrocarbyloxysilane compounds by substituting the epoxy group therein with a thioepoxy group. Preferred examples of the nitrogen-containing compound include one or more compounds selected from bis(diethylamino)benzophenone, dimethylimidazolidinone, N-methylpyrrolidone and 4-dimethylaminobenzylidene aniline.

The modified conjugated dienic polymer having one or more functional groups each having an atom other than carbon and hydrogen is preferably a modified conjugated dienic polymer having one or more functional groups each having at least one of nitrogen, oxygen and silicon atoms.

The unmodified conjugated dienic polymer to form the modified conjugated dienic polymer in the present invention may be a conjugated dienic homopolymer prepared through polymerization of one kind of a conjugated dienic monomer, or a conjugated dienic copolymer prepared through polymerization of two or more kinds of the monomers. The conjugated dienic copolymer may be one prepared by polymerizing two or more kinds of a conjugated dienic monomer, or one prepared through copolymerization of one or more kinds of a conjugated dienic monomer and one or more kinds of an aromatic vinyl compound.

Examples of the conjugated dienic monomer include 1,3-butadiene, isoprene, 1,3-pentadiene, 2,3-dimethyl-1,3-butadiene, 2-phenyl-1,3-butadiene, 1,3-hexadiene, etc. Among these, 1,3-butadiene, isoprene and 2,3-dimethyl-1,3-butadiene are especially preferred.

Examples of the aromatic vinyl compound include styrene, $\alpha$-methylstyrene, 1-vinylnaphthalene, 3-vinyltoluene, ethylvinylbenzene, divinylbenzene, 4-cyclohexylstyrene, 2,4,6-trimethylstyrene, etc. Among these, a styrene is especially preferred.

The unmodified conjugated dienic polymer to form the modified conjugated dienic polymer in the present invention is preferably polybutadiene rubber (BR), styrene-butadiene copolymer rubber (SBR), polyisoprene rubber (IR), isoprene-butadiene copolymer rubber (IBR), styrene-isoprene copolymer rubber (SIR), etc., but from the viewpoint of improving the performance of tire tread, polybutadiene rubber and polyisoprene rubber are more preferred, and polybutadiene rubber is especially preferred.

The polymerization method for the conjugated dienic polymer in the present invention may be anionic polymerization or coordination polymerization.

In the case where the conjugated dienic polymer is obtained through anionic polymerization, an alkali metal compound may be used as the polymerization initiator, and a lithium compound is preferred.

The lithium compound for the polymerization initiator is not specifically limited, but a hydrocarbyl lithium and lithium amide compounds are preferably used, and in the case where the former hydrocarbyl lithium is used, a conjugated dienic polymer which has a hydrocarbyl group at the polymerization initiation terminal and in which the other terminal is a polymerization active site is obtained. On the other hand, when the latter lithium amide compound is used, a conjugated dienic polymer which has a nitrogen-containing group at the polymerization initiation terminal and in which the other terminal is a polymerization active site is obtained.

The above-mentioned hydrocarbyl lithium is preferably one having a hydrocarbyl group with 2 to 20 carbon atoms, and examples thereof include ethyl lithium, n-propyl lithium, isopropyl lithium, n-butyl lithium, sec-butyl lithium, tert-octyl lithium, n-decyl lithium, phenyl lithium, 2-naphthyl lithium, 2-butylphenyl lithium, 4-phenylbutyl lithium, cyclohexyl lithium, cyclopentyl lithium, a reaction product of diisopropenylbenzene and butyl lithium, etc. Among these, n-butyl lithium is especially preferred.

Examples of the lithium amide compound include lithium hexamethyleneimide, lithium pyrrolidide, lithium piperidide, lithium heptamethyleneimide, lithium dodecamethyleneimide, lithium dimethylamide, lithium diethylamide, lithium dibutylamide, lithium dipropylamide, lithium diheptylamide, lithium dihexylamide, lithium dioctylamide, lithium di-2-ethylhexylamide, lithium didecylamide, lithium N-methylpiperazide, lithium ethylpropylamide, lithium ethylbutylamide, lithium ethylbenzylamide, lithium methylphenethylamide, etc. Among these, from the viewpoint of the interaction effect with carbon black and the polymerization initiation performance, cyclic lithium amides such as lithium hexamethyleneimide, lithium pyrrolidide, lithium piperidide, lithium heptamethyleneimide, and lithium dodecamethyleneimide are preferred, and lithium hexamethyleneimide and lithium pyrrolidide are more preferred.

The use of lithium hexamethyleneimide as the polymerization initiator is further more preferred since a modified conjugated dienic polymer that has a hexamethyleneimino group being a nitrogen-containing compound residue as the functional group having an atom other than carbon and hydrogen at the initiation terminal of the conjugated dienic polymer can be obtained.

In the present invention, the modified conjugated dienic polymer having a nitrogen-containing compound residue at the initiation terminal of a conjugated dienic polymer and having one or more compound residues selected from a tin compound residue, a nitrogen and silicon-containing compound residue, an oxygen and silicon-containing compound residue, a sulfur and silicon-containing compound and a nitrogen-containing compound residue at the active terminal of the conjugated dienic polymer is more preferred from the viewpoint of reducing more the rolling resistance and improving more the abrasion resistance, the anti-tear performance (tear resistance) and the cut resistance.

The method for producing the conjugated dienic polymer through anionic polymerization using the above-mentioned lithium compound as the polymerization initiator is not specifically limited, and any already-existing known method is usable.

Specifically, in an organic solvent inactive to the reaction, for example, in a hydrocarbon solvent such as an aliphatic, alicyclic or aromatic compound or the like, a conjugated dienic compound, or a conjugated dienic compound and an aromatic vinyl compound may be subjected to anionic polymerization using the above-mentioned lithium compound as a polymerization initiator and in the presence of an optional randomizer to give the intended conjugated dienic polymer.

The hydrocarbon solvent is preferably one having 3 to 8 carbon atoms, and examples thereof include propane, n-butane, isobutane, n-pentane, isopentane, n-hexane, cyclohexane, propene, 1-butene, isobutene, trans-2-butene, cis-2-butene, 1-pentene, 2-pentene, 1-hexene, 2-hexene, benzene, toluene, xylene, and ethylbenzene. One alone or two or more of these may be used either singly or as combined.

The optional randomizer is a compound that controls the microscopic structure of the conjugated dienic polymer, for example, for increasing the 1,2-bond of the butadiene moiety in a butadiene-styrene copolymer or increasing the 3,4-bond in an isoprene polymer, or controls the compositional distribution of the monomer units in a conjugated dienic compound-aromatic vinyl compound copolymer, for example, for randomizing the butadiene units or the styrene units in a butadiene-styrene copolymer.

The randomizer is not specifically limited, and may be suitably selected from any known compounds heretofore generally used as randomizers. Specifically, there are mentioned ethers and tertiary amines such as dimethoxybenzene, tetrahydrofuran, dimethoxyethane, diethylene glycol dibutyl ether, diethylene glycol dimethyl ether, 2,2-bis(2-tetrahydrofuryl)-propane, triethylamine, pyridine, N-methylmorpholine, N,N,N',N'-tetramethylethylenediamine, and 1,2-dipiperidinoethane. In addition, potassium salts such as potassium tert-amylate, and potassium tert-butoxide, and sodium salts such as sodium tert-amylate are also usable.

One alone or two or more these randomizers may be used either singly or as combined. The amount thereof to be used is preferably selected from a range of 0.01 to 1,000 molar equivalents per mol of the lithium compound.

The temperature of the polymerization reaction is selected from a range of preferably 0 to 150°C, more preferably 20 to 130°C. The polymerization reaction may be carried out under the generated pressure but, in general, it is desirable that the reaction is operated under a sufficient pressure for keeping the monomer substantially in a liquid phase. Specifically, depending on the individual substances to be polymerized or on the polymerization medium or the polymerization temperature, a high pressure may be optionally employed, and such a pressure may be attained according to a suitable method of pressuring the reactor with a gas inactive to the polymerization reaction.

On the other hand, in the case where the modified conjugated dienic polymer is produced through coordination polymerization using a rare earth metal compound as the polymerization initiator, use of the following component (A), component (B) and component (C) in combination is more preferred.

The component (A) for use in the coordination polymerization is selected from a rare earth metal compound, and a complex compound of a rare earth metal compound and a Lewis base, etc. Here, the rare earth metal compound include carboxylates, alkoxides, β-diketone complexes, phosphates, phosphites, etc. of a rare earth element. The Lewis base includes acetylacetone, tetrahydrofuran, pyridine, N,N-dimethylformamide, thiophene, diphenyl ether, triethylamine, organic phosphorus compounds, mono or dialcohols, etc. The rare earth element of the rare earth metal compound is preferably lanthanum, neodymium, praseodymium, samarium or gadolinium. Among these, neodymium is especially preferred. Specifically, as the component (A), neodymium tri-2-ethylhexanoate, a complex compound thereof with acetylacetone, neodymium trineodecanoate, a complex compound thereof with acetylacetone, and neodymium tri-n-butoxide, etc. are exemplified. One alone or two or more these components (A) may be used either singly or as combined.

The component (B) for use in the coordination polymerization is selected from an organic aluminium compound. Specifically, as the organic aluminium compound, a trihydrocarbyl aluminium compound represented by a formula: $R^{12}_3Al$, a hydrocarbyl aluminium hydride represented by a formula: $R^{12}_2AlH$ or $R^{12}AlH_2$ (wherein $R^{12}$ each independently represent a hydrocarbon group having 1 to 30 carbon atoms), a hydrocarbylaluminoxane compound having a hydrocarbon group with 1 to 30 carbon atoms, etc. are exemplified. Specifically, as the organic aluminium compound, a trialkylaluminium, a dialkylaluminium hydride, an alkylaluminium dihydrides, an alkylaluminoxanes, etc. are exemplified. One alone or two or more these compounds may be used either singly or as combined. As the component (B), preferably, an aluminoxanes and any other organic aluminium compound are used in combination.

The component (C) for use in the coordination polymerization is selected from a hydrolyzable halogen-having compound or a complex compound thereof with a Lewis base; an organic halide including a tertiary alkyl halide, a benzyl halide or an allyl halide; an ionic compound composed of a non-coordinating anion and a counter cation, etc. Specifically, as the component (C), an alkylaluminium dichloride, a dialkylaluminium chloride, a complex with a Lewis base such as silicon tetrachloride, tin tetrachloride, zinc chloride and an alcohol; a complex with a Lewis base such as magnesium chloride and an alcohol; benzyl chloride, t-butyl chloride, benzyl bromide, t-butyl bromide, triphenylcarbonium tetrakis(pentafluorophenyl)borate, etc. are exemplified. One alone or two or more these components (C) may be used either singly or as combined.

The above-mentioned polymerization initiator may be previously prepared optionally using the same conjugated diene compound as that of the monomer for polymerization and/or a non-conjugated diene compound, in addition to the above-mentioned components (A), (B) and (C). If desired, a part or all of the component (A) or the component (C) may be held on an inactive solid. The amount of each component may be suitably defined, but in general, the amount of the component (A) is 0.001 to 0.5 mmol per 100 g of the monomer. In a molar ration, preferably, component (B)/component (A) is 5 to 1,000, and component (C)/component (A) is 0.5 to 10.

The polymerization temperature in the above-mentioned coordination polymerization is preferably within a range of -80 to 150°C, more preferably within a range of -20 to 120°C. As the solvent for use in the coordination polymerization, the hydrocarbon solvent inactive to the reaction, as exemplified for the above-mentioned anionic polymerization, may be used, and the concentration of the monomer in the reaction solution is the same as that in the anionic polymerization. Further, the reaction pressure in the coordination polymerization may also be the same as in the anionic polymerization, and the raw materials for use in the reaction are preferably those from which reaction-inhibiting substances such as water, oxygen, carbon dioxide, and protonic compounds have been substantially removed.

The modified conjugated dienic polymer is preferably one prepared through anionic polymerization using an organic alkali metal compound, especially an alkyl lithium.

After the polymerization reaction in any case of anionic polymerization or coordination polymerization, the conjugated dienic polymer in the present invention may be subjected to modification reaction at the polymerization active terminal thereof with the above-mentioned modifier to give the modified conjugated dienic polymer.

The modification reaction temperature is preferably 20°C or higher, but the polymerization temperature for the conjugated dienic polymer may be used directly as it is, and a range of 30 to 120°C is more preferred. When the reaction temperature is lowered, the viscosity of the polymer tends to increase too much or the dispersibility of the reaction products tends to worsen. On the other hand, when the reaction temperature is raised, the polymerization active site tends to deactivate.

The amount of the modifier to be used is preferably within a range of 0.25 to 3.0 mol, more preferably within a range of 0.5 to 1.5 mol, based on 1 mol of the polymerization initiator used in production of the conjugated dienic polymer.

Examples of the other rubber component optionally mixed, in addition to the above-mentioned natural rubber and modified conjugated dienic polymer, into the rubber composition of the present invention include unmodified styrene-butadiene copolymer (SBR), unmodified polybutadiene rubber (BR), polyisoprene rubber (IR), butyl rubber (IIR), ethylene-propylene-diene terpolymer, etc. These other rubber components than the natural rubber and the modified conjugated dienic polymer may be used singly or as a blend of two or more of them.

[Filler]

The rubber composition for tire tread of the present invention contains a filler in an amount of 35 to 70 parts by mass per 100 parts by mass of the rubber component therein, and the silica content in the filler is 3 to 30% by mass.

When the filler content in the rubber composition for tire tread is less than 35 parts by mass per 100 parts by mass of the rubber component, the rubber component could not be reinforced sufficiently and the tread obtained from the rubber composition for tire tread is not excellent in abrasion resistance and could not reduce rolling resistance. When the content of the filler is more than 70 parts by mass per 100 parts by mass of the rubber component, stiffness of the tread is too high and therefore tear resistance and cut resistance thereof are thereby worsened.

The content of the filler in the rubber composition for tire tread is preferably 40 to 70 parts by mass per 100 parts by mass of the rubber component, even more preferably 45 to 65 parts by mass.

(Silica)

The filler contains at least silica, and the silica content in the filler is 3 to 30% by mass.

As already described hereinabove, the rubber composition for tire tread of the present invention contains silica in an amount of at most 21 parts by mass per 100 parts by mass of the rubber component therein, but in general, when a filler contains such an amount of silica alone, it could not reinforce a rubber component. However, containing, along with silica, a filler except silica that poorly interacts with a glycerin fatty acid ester composition, such as carbon black, a rubber composition can form a tread having a reduced rolling resistance and having improved abrasion resistance, tear resistance and cut resistance.

Even though the silica content in the rubber composition for tire tread of the present invention is 21 parts by mass or less per 100 parts by mass of the rubber component therein, the composition could not improve rolling resistance, abrasion resistance, tear resistance and cut resistance when the silica content in the filler is not 30% by mass or less. On the other hand, when the silica content in the filler is less than 3% by mass, the dispersibility of the filler therein except silica could not be improved even though the rubber composition for tire tread contains a glycerin fatty acid ester composition in an amount of 0.1 to 10 parts by mass per 100 parts by mass of the rubber component.

From the viewpoint of improving rolling resistance, abrasion resistance, tear resistance and cut resistance, the silica content in the filler is preferably 12 to 30% by mass, more preferably 16 to 29% by mass, even more preferably 19 to 25% by mass.

The silica content in the rubber composition for tire tread is preferably 20 parts by mass or less per 100 parts by mass of the rubber component, more preferably 15 parts by mass or less.

In the present invention, silica is not specifically limited, and examples thereof include wet method silica (hydrous silicic acid), dry method silica (silicic anhydride), and colloidal silica.

Of the above-mentioned silica, the adsorption specific surface area (CTAB adsorption specific surface area) measured according to a cetyltrimethylammonium bromide adsorption method (CTAB) is preferably within a range of 50 to 350 $m^2$/g, more preferably 100 to 300 $m^2$/g.

The CTAB adsorption specific surface area can be measured according to a method of ASTM-D3765-80.

Silica having a CTAB adsorption specific surface area of 50 to 350 $m^2$/g may be a commercially-available one, and is, for example, available as NIPSIL AQ (trade name) from Tosoh Silica Corporation, Zeosil 1115MP (trade name) from Rhodia S.A., and VN-3 (trade name) from Evonik Degussa Corporation.

[Silane Coupling Agent]

Since the rubber composition for tire tread of the present invention contains silica, though in a small amount, the rubber composition preferably further contains a silane coupling agent for reinforcing the binding between silica-rubber component and additionally for further enhancing reinforcing performance and improving dispersibility of silica.

The content of the silane coupling agent in the rubber composition for tire tread of the present invention is preferably 5 to 15% by mass or less per the content of silica. The content of the silane coupling agent of 15% by mass or less per the content of silica secures an effect of improving reinforcing performance and dispersibility of the rubber component and hardly interferes with economic performance. When the content of the silane coupling agent is 5% by mass or more per the content of silica, dispersibility of silica in the rubber composition for tire tread can be improved.

The silane coupling agent is not specifically limited, and preferred examples thereof include bis(3-triethoxysilylpropyl) disulfide, bis(3-triethoxysilylpropyl) trisulfide, bis(3-triethoxysilylpropyl) tetrasulfide, bis(3-trimethoxysilylpropyl) disulfide, bis(3-trimethoxysilylpropyl) trisulfide, bis(3-trimethoxysilylpropyl)tetrasulfide, bis(2-triethoxysilylethyl) disulfide, bis(2-triethoxysilylethyl) trisulfide, bis(2-triethoxysilylethyl) tetrasulfide, 3-trimethoxysilylpropyl-benzothiazole disulfide, 3-trimethoxysilylpropyl-benzothiazol trisulfide, and 3-trimethoxysilylpropyl-benzothiazole tetrasulfide.

The filler that the rubber composition for tire tread of the present invention contains includes, in addition to silica, a metal oxide such as alumina and titania, and carbon black, and above all, from the viewpoint of improving abrasion resistance and tensile characteristics of tread, carbon black is preferred.

(Carbon Black)

The rubber composition for tire tread of the present invention preferably contains a carbon black from the viewpoint of improving abrasion resistance and tensile characteristics of tread.

Further, from the viewpoint of more increasing the affinity for the modified conjugated dienic polymer in the present invention to thereby more effectively reduce tire rolling resistance and more effectively improving abrasion resistance, tear resistance and cut resistance of tire, the filler preferably contains a carbon black having a dibutyl phthalate absorption amount (DBP absorption amount) of 40 to 180 $cm^3$/100 g, a nitrogen adsorption specific surface area ($N_2$SA) of 40 to 95 $m^2$/g, a toluene extract light transmittance of 90% or more and a hydrogen release rate of 0.37% by mass or more.

[Dibutyl Phthalate Absorption (DBP absorption)]

The carbon black in the present invention preferably has a dibutyl phthalate absorption amount (DBP absorption amount) of 40 to 180 $cm^3$/100 g. When the DBP absorption amount is 40 $cm^3$/100 g or more, the rubber composition for tire tread can express a minimum required tensile strength, and when it is 180 $cm^3$/100 g or less, the rubber composition can secure a minimum required elongation.

The DBP absorption amount of the carbon black in the present invention is more preferably 70 to 175 $cm^3$/100 g.

The DBP absorption amount may be measured according to the method described in JIS K 6217-4:2008, and is expressed as the volume mL of dibutyl phthalate (DBP) absorbed by 100 g of carbon black.

[Nitrogen Adsorption Specific Surface Area ($N_2$SA)]

The nitrogen adsorption specific surface area ($N_2$SA) of the carbon black in the present invention is preferably 40 to 95 $m^2$/g. When the carbon black has a nitrogen adsorption specific surface area of 40 $m^2$/g or more, the rubber composition for tire tread can express a minimum required tensile strength, and when it is 95 $m^2$/g or less, sufficient dispersibility in the rubber composition is secured so that the abrasion resistance of the rubber composition is excellent.

More preferably, the nitrogen adsorption specific surface area ($N_2$SA) of the carbon black in the present invention is 50 to 95 $m^2$/g, even more preferably 60 to 95 $m^2$/g.

The nitrogen adsorption specific surface area ($N_2$SA) may be measured based on JIS K 6217-2:2001.

[Toluene Extract Light Transmittance]

The carbon black in the present invention preferably has a toluene extract light transmittance of 90% or more.

When the carbon black has a toluene extract light transmittance of 90% or more, a tar component, especially an aromatic component that may exist in the surface of the carbon black can be reduced, therefore increasing the interaction of the carbon black with the modified conjugated dienic polymer in the present invention, and accordingly, the rubber component can be sufficiently reinforced to enhance abrasion resistance of the rubber composition. The toluene extract light transmittance of the carbon black is preferably 95% or more.

[Hydrogen Release Rate]

The carbon black in the present invention preferably has a hydrogen release rate of 0.37% by mass or more.

When the hydrogen release rate is 0.37% by mass or more, the interaction of the carbon black with the modified conjugated dienic polymer in the present invention can be enhanced, and accordingly the rubber component can be sufficiently reinforced to enhance abrasion resistance of tread.

The hydrogen release rate of the carbon black is preferably 0.40% by mass or more. The hydrogen release rate is not specifically limited in point of the upper limit thereof, but from the viewpoint of easiness in production in point of restrictions of equipment, the upper limit of the hydrogen release rate is generally 0.60% by mass or so.

For the hydrogen release rate of the carbon black, (1) a carbon black sample is dried in a constant temperature drier at 105°C for 1 hour, and cooled in a desiccator to room temperature (23°C), (2) about 10 mg of the sample is accurately metered in a tin-made tubular sample vessel, and sealed up under pressure, and (3) using a gas chromatography apparatus, this is heated in an argon stream atmosphere at 2,000°C for 15 minutes and the hydrogen gas generation amount during this is measured, and the value is expressed as % by mass.

The carbon black having the above-mentioned physical properties for use in the present invention may be prepared using a reaction system (carbon black production furnace) having, as continuously arranged therein, a combustion gas production zone, a reaction zone and a reaction stopping zone, in which a high-temperature combustion gas is produced in the combustion gas production zone and then a raw material is sprayed and introduced into the reaction zone to thereby form a reaction gas stream containing carbon black, and thereafter in the reaction stopping zone, the reaction gas stream is rapidly cooled by a multistage rapidly-cooling medium introduction means to terminate the reaction, thereby obtaining carbon black. In the carbon black production furnace, by suitably controlling the production air amount (kg/hr), the air temperature (°C), the fuel introduction amount (kg/hr), the raw material introduction amount (kg/hr) and the raw material preheating temperature (°C), carbon black having a desired nitrogen adsorption specific surface area ($N_2SA$), a desired DBP absorption amount, a desired toluene extract light transmittance and a desired hydrogen release rate can be obtained.

The content of carbon black in the rubber composition for tire tread is preferably 40 to 60 parts by mass per 100 parts by mass of the rubber component therein. The total amount of carbon black and silica is preferably 65 parts by mass or less per 100 parts by mass of the rubber component.

When the content of carbon black is 40 parts by mass or more per 100 parts by mass of the rubber component, the rubber component can be fully reinforced. On the other hand, when the content of carbon black is 60 parts by mass or less per 100 parts by mass of the rubber component, carbon black can readily disperse in the rubber composition for tire tread and therefore the abrasion resistance and the tear resistance of the tread obtained from the rubber composition for tire tread can be improved and the tire rolling resistance can be reduced more.

[Glycerin Fatty Acid Ester Composition]

The rubber composition for tire tread of the present invention contains a glycerin fatty acid ester composition in an amount of 0.1 to 10 parts by mass per 100 parts by mass of the rubber component therein.

The rubber composition for tire tread of the present invention contains, along with a small amount of silica, a glycerin fatty acid ester composition in an amount of 0.1 to 10 parts by mass per 100 parts by mass of the rubber component therein, and accordingly filler dispersibility in the rubber composition for tire tread is increased, therefore providing a tread capable of reducing tire rolling resistance and capable of improving abrasion resistance, tear resistance and cut resistance thereof.

The content of the glycerin fatty acid ester composition in the rubber composition for tire tread of the present invention is preferably 0.5 to 7.0 parts by mass per 100 parts by mass of the rubber component therein, more preferably 0.8 to 4.5 parts by mass.

The glycerin fatty acid ester composition contains at least one glycerin fatty acid ester that is an ester of glycerin and a fatty acid.

The glycerin fatty acid ester is such that a fatty acid bonds to at least one of the three OH groups that glycerin has, in a mode of ester bond therebetween, and depending on the number of the bonding fatty acids, the ester is grouped into a glycerin fatty acid monoester, a glycerin fatty acid diester and a glycerin fatty acid triester. Specifically, the ester includes a glycerin fatty acid monoester (monoester component) where one molecule of glycerin is esterified with one molecule of a fatty acid, a glycerin fatty acid diester (diester component) where one molecule of glycerin is esterified with two molecules of a fatty acid, and a glycerin fatty acid triester (triester component) where one molecule of glycerin is esterified with three molecules of a fatty acid.

Two fatty acids to constitute the glycerin fatty acid diester and three fatty acids to constitute the glycerin fatty acid triester each may be the same or different.

The glycerin fatty acid ester composition preferably contains at least one selected from the group consisting of a glycerin fatty acid monoester, a glycerin fatty acid diester and a glycerin fatty acid triester, and more preferably contains at least a glycerin fatty acid monoester (monoester component).

In producing a glycerin fatty acid ester, glycerin may remain as an unreacted raw material. The content of glycerin in the glycerin fatty acid ester composition is, from the viewpoint of preventing heat resistance of the rubber composition for tire tread from lowering, preferably 10% by mass or less, more preferably 5% by mass or less, even more preferably 3% by mass or less, and from the viewpoint of productivity, the content may be 0.3% by mass or more.

(Fatty Acid)

The kind of the fatty acid that is a raw material for the glycerin fatty acid ester is not specifically limited, and may be a monobasic fatty acid or a dibasic or higher polybasic fatty acid, and may be a saturated fatty acid or an unsaturated fatty acid.

The carbon number of the fatty acid is, from the viewpoint of reducing the viscosity of unvulcanized rubber, 8 or more, preferably 10 or more, more preferably 12 or more, even more preferably 16 or more, and is, from the viewpoint of improving heat resistance, 28 or less, preferably 22 or less, more preferably 18 or less.

The fatty acid may be saturated or unsaturated, and linear or branched, but a linear saturated fatty acid is especially preferred. Specific examples of the fatty acid include caprylic acid, pelargonic acid, capric acid, lauric acid, myristic acid, palmitic acid, stearic acid, isostearic acid, oleic acid, linolic acid, linoleic acid, alagic acid, arachidonic acid, and behenic acid. Among these, lauric acid, myristic acid, palmitic acid and stearic acid are preferred, and palmitic acid and stearic acid are more preferred.

Regarding the fatty acid to be a raw material for the glycerin fatty acid ester, every fatty acid that is the same in point of the steric configuration and the bonding state thereof in addition to the alkyl carbon number, that is, every stereoisomer is considered to be one component. For example, a fatty acid having the same carbon number of 18 includes n-1-octadecanoic acid (normal linear stearic acid), 2-octyl-1-decanoic acid (2-branched stearic acid), cis-9-octadecenoic acid (normal oleic acid) and cis,cis-9,12-octadecadienoic acid (normal linolic acid), and these are considered to be different fatty acids.

Among the glycerin fatty acid ester composition containing a glycerin fatty acid ester of a fatty acid and glycerin mentioned above, preferred embodiments of the glycerin fatty acid ester for use in the present invention are:

1) a glycerin fatty acid ester composition containing a glycerin fatty acid monoester and a glycerin fatty acid diester that are esters of glycerin and a fatty acid having 8 to 28 carbon atoms, in which the content of the glycerin fatty acid monoester is 85% by mass or less (first embodiment); and

2) a glycerin fatty acid ester composition containing a glycerin fatty acid ester of an ester of glycerin and two or more kinds of fatty acids, in which in the fatty acid component that is a fatty acid-derived moiety in the glycerin fatty acid ester, the content of the fatty acid component whose amount is the largest among all the fatty acid components of the entire glycerin fatty acid ester is 10 to 90% by mass, and the content of the glycerin fatty acid monoester in the glycerin fatty acid ester composition is 50 to 100% by mass (second embodiment).

These two embodiments are described below.

(First Embodiment)

The glycerin fatty acid ester composition of the first embodiment contains a glycerin fatty acid monoester and a glycerin fatty acid diester that are esters of glycerin and a fatty acid having 8 to 28 carbon atoms, in which the content of the glycerin fatty acid monoester is 85% by mass or less.

When the rubber composition for tire tread of the present invention contains glycerin fatty acid ester composition of the first embodiment, the dispersibility of the other filler than silica therein can be improved and, in addition, the rubber composition can prevent shrinkage and rubber scorching and, without delaying the vulcanization rate of rubber, improvement in processability owing to reduction in the viscosity of silica-added unvulcanized rubber can be attained and various properties such as heat resistance can be highly enhanced.

The glycerin fatty acid ester composition of the first embodiment contains at least two kinds of glycerin fatty acid esters of a glycerin fatty acid monoester and a glycerin fatty acid diester, in which the content of the glycerin fatty acid monoester is 85% by mass or less. The glycerin fatty acid ester composition of the first embodiment may further contain a glycerin fatty acid triester, glycerin and others.

When the content of the glycerin fatty acid monoester content in the glycerin fatty acid ester composition of the first embodiment is 85% by mass or less, the rubber composition for tire tread of the present invention can be prevented from shrinking and the heat resistance of vulcanized rubber is hardly worsened.

Consequently, in the glycerin fatty acid ester composition of the first embodiment, the glycerin fatty acid monoester content is, from the viewpoint of reducing the viscosity of unvulcanized rubber, preferably 35% by mass or more, more preferably 40% by mass or more, even more preferably 45% by mass or more, and further more preferably 50% by mass or more, and from the viewpoint of retarding scorching, retarding shrinkage and maintaining heat resistance, the content is 85% by mass or less, preferably 80% by mass or less, more preferably 75% by mass or less, and is preferably 35 to 85% by mass, more preferably 40 to 85% by mass, even more preferably 45 to 85% by mass, still more preferably 50 to 85% by mass, further more preferably 50 to 80% by mass, and still further more preferably 50 to 75% by mass.

The content of the glycerin fatty acid diester in the glycerin fatty acid ester composition of the first embodiment is, from the viewpoint of retarding shrinkage, retarding scorching and bettering heat resistance, preferably 10% by mass or more, more preferably 15% by mass or more, even more preferably 20% by mass or more, and from the viewpoint of reducing the viscosity of unvulcanized rubber, preferably 65% by mass or less, more preferably 55% by mass or less, even more preferably 50% by mass or less, and is preferably 10 to 65% by mass, more preferably 15 to 55% by mass, even more preferably 15 to 50% by mass, and still more preferably 20 to 50% by mass.

The ratio by mass of glycerin fatty acid monoester/glycerin fatty acid diester in the glycerin fatty acid ester composition of the first embodiment is, from the viewpoint of reducing the viscosity of unvulcanized rubber, preferably 0.5 or more, more preferably 0.8 or more, even more preferably 0.9 or more, further more preferably 1.0 or more, and from the viewpoint of retarding shrinkage, retarding scorching and bettering heat resistance, preferably 10 or less, more preferably 8 or less, even more preferably 6 or less, further more preferably 5 or less, further more preferably 4 or less, and further more preferably 3 or less.

The content of the glycerin fatty acid triester in the glycerin fatty acid ester composition of the first embodiment is, from the viewpoint of preventing too much worsening of physical properties of vulcanized rubber (e.g., reduction in storage elastic modulus), preferably 10% by mass or less, more preferably 5% by mass or less, even more preferably 3% by mass or less, and from the viewpoint of productivity, the content may be 0.3% by mass or more.

The total content of the glycerin fatty acid diester and the glycerin fatty acid triester in the glycerin fatty acid ester composition of the first embodiment is, from the viewpoint of reducing the viscosity of unvulcanized rubber, retarding shrinkage and bettering heat resistance, preferably 15 to 50% by mass, more preferably 17 to 50% by mass.

In particular, in the glycerin fatty acid ester composition, from the viewpoint of reducing the viscosity of unvulcanized rubber, retarding shrinkage, retarding scorching and bettering heat resistance, preferably the glycerin fatty acid monoester content is 50 to 85% by mass and the total content of the glycerin fatty acid diester and triester is 15 to 50% by mass; in the glycerin fatty acid ester composition, more preferably the glycerin fatty acid monoester content is 50 to 80% by mass and the total content of the the glycerin fatty acid diester and triester is 17 to 50% by mass; preferably the glycerin fatty acid monoester content is 50 to 85% by mass and the glycerin fatty acid diester content is 15 to 50% by mass; and even more preferably the glycerin fatty acid monoester content is 50 to 80% by mass and the glycerin fatty acid diester content is 20 to 50% by mass.

The glycerin fatty acid monoester and the glycerin fatty acid diester contained in the glycerin fatty acid ester composition of the first embodiment are both esters of a fatty acid having 8 to 28 carbon atoms and glycerin.

When the fatty acid has 8 or more carbon atoms, affinity between a rubber component and a glycerin fatty acid ester composition can be secured and blooming hardly occurs. Blooming means precipitation of a glycerin fatty acid ester composition from vulcanized rubber of tread and the like. On the other hand, when the fatty acid has 28 or less carbon atoms, the rubber composition secures a processability improving effect.

The carbon number of the fatty acid to be a raw material for the glycerin fatty acid monoester and the glycerin fatty acid diester contained in the glycerin fatty acid ester composition of the first embodiment is, from the viewpoint of improving processability owing to reduction in the viscosity of unvulcanized rubber, retarding shrinkage and bettering heat resistance, preferably 8 to 22, more preferably 10 to 18, even more preferably 12 to 18.

The glycerin fatty acid ester composition of the first embodiment can be produced according to an esterification method using glycerin as a decomposed product of oils and fats and a fatty acid, or an interesterification method using oils and fats and glycerin as raw materials. For producing a glycerin fatty acid ester composition in which the monoester amount is controlled, the following methods 1) to 3) are employable.

1) In the esterification method and the interesterification method, the charge-in ratio of the fatty acid and glycerin are changed to control the esterification equilibrium composition. In this, glycerin can removed through further distillation. However, in view of the reaction characteristics, the upper limit of the glycerin fatty acid monoester amount is considered to be about 65% by mass or so.

2) The reaction product obtained according to the esterification method or the interesterification method is further fractionated and distilled through molecular distillation to take out a glycerin fatty acid monoester having a high purity (generally 95% by mass or more).

3) The high-purity glycerin fatty acid monoester obtained according to the method 2) is mixed with the middle-purity glycerin fatty acid monoester obtained according to the method 1) in any desired ratio to give a glycerin fatty acid monoester in a relatively high-purity region (about 65 to 95% by mass or so).

Using natural products as the oils and fats and the fatty acids as raw materials, a glycerin fatty acid ester that contributes toward reduction of environmental burdens can be used herein. Further, the glycerin fatty acid ester composition for use in the present invention can be a commercially-available one in which the monoester amount is controlled; and examples of commercial products include stearic acid monoglycerides (Rheodol MS-60 and Excel S-95, both available from Kao Corporation).

In the present invention, the glycerin fatty acid monoester content (monoglyceride content) in the glycerin fatty acid ester composition is determined through GPC analysis (gel permeation chromatography) and according to the following equation (I), and means an areal ratio in GPC analysis of the glycerin fatty acid monoester (monoglyceride) to the total of glycerin, the glycerin fatty acid monoester, the glycerin fatty acid diester (diglyceride) and the glycerin fatty acid triester (triglyceride) therein.

The same shall apply also to the case of the glycerin fatty acid ester composition of the second embodiment.

$$\text{Content of Glycerin Fatty Acid Monoester (areal \%)}$$

$$= \frac{MG}{[G + MG + DG + TG]} \times 100 \quad (\text{I})$$

In the above-mentioned equation (I), G represents a glycerin area in GPC, MG means a glycerin fatty acid monoester area in GPC, DG means a glycerin fatty acid diester area in GPC, TG means a glycerin fatty acid triester area in GPC.

Measurement conditions in GPC are as follows.

[Measurement Condition in GPC]

The following measurement apparatus was used in GPC measurement, and as an eluent, THF (tetrahydrofuran) was made to run at a flow rate of 0.6 ml/min and the columns were stabilized in a constant-temperature bath at 40°C. 10 µl of a 1 mass% sample solution dissolved in THF was injected into the apparatus for measurement.

Standard substance: monodispersed polystyrene
Detector: RI-8022 (available from Tosoh Corporation)
Measurement apparatus: HPLC-8220 GPC (available from Tosoh Corporation)
Analysis column: two columns of TSK-GEL SUPER H1000 and two columns of TSK-GEL SUPER H2000 connected in series (available from Tosoh Corporation)

Similarly, the content of the glycerin fatty acid diester (diglyceride) in the glycerin fatty acid ester composition means an areal ratio in GPC analysis of the glycerin fatty acid diester to the total of glycerin, the glycerin fatty acid monoester, the glycerin fatty acid diester and the glycerin fatty acid triester therein.

Examples of the glycerin fatty acid ester composition which is usable herein and which has a controlled monoester content include a glyceryl caprylate-containing composition in which the fatty acid has 8 carbon atoms, a glyceryl decanoate-containing composition in which the fatty acid has 10 carbon atoms, a glyceryl laurate-containing composition in which the fatty acid has 12 carbon atoms, a glyceryl myristate-containing composition in which the fatty acid has 14 carbon atoms, a glyceryl palmitate-containing composition in which the fatty acid has 16 carbon atoms, a glyceryl stearate-containing composition in which the fatty acid has 18 carbon atoms, a glyceryl behenate-containing composition in which the fatty acid has 22 carbon atoms, and a glyceryl montanoate-containing composition in which the fatty acid has 28 carbon atoms. Among these, a glyceryl laurate-containing composition, a glyceryl palmitate-containing composition and a glyceryl stearate-containing composition are preferred. One alone or two or more kinds of these glycerin fatty acid ester-containing compositions having a controlled monoester content can be used either singly or as combined.

(Second Embodiment)

The glycerin fatty acid ester composition of the second embodiment contains a glycerin fatty acid ester of an ester of glycerin and two or more kinds of fatty acids, in which in the fatty acid component that is a fatty acid-derived moiety in the glycerin fatty acid ester, the content of the fatty acid component whose amount is the largest among all the fatty acid components of the entire glycerin fatty acid ester is 10 to 90% by mass, and the content of the glycerin fatty acid monoester in the glycerin fatty acid ester composition is 50 to 100% by mass.

When the rubber composition for tire tread of the present invention contains a glycerin fatty acid ester composition of the first embodiment, dispersibility of the other filler than silica therein can be improved and, in addition, the processability, the low-heat generation property and the rupture resistance characteristics of the rubber composition can be well balanced in a high level.

The glycerin fatty acid ester to constitute the glycerin fatty acid ester composition of the second embodiment is an ester of glycerin and two or more kinds of fatty acids.

The glycerin fatty acid ester may be a glycerin fatty acid diester or a glycerin fatty acid triester produced through esterification of two or more kinds of fatty acids with one molecule of glycerin, or may be a mixture of a glycerin fatty acid monoester produced through esterification of one molecule of glycerin and one molecule of one kind of a fatty acid of the two or more kinds of fatty acids, and a glycerin fatty acid monoester produced through esterification of one molecule of glycerin and one molecule of other kinds of fatty acids.

Above all, from the viewpoint of improving the processability, the low-heat generation property and the rupture resistance characteristics of the rubber composition for tire tread of the present invention, preferred is a mixture of a glycerin fatty acid monoester produced through esterification of one molecule of glycerin and one molecule of one kind of a fatty acid of the two or more kinds of fatty acids, and a glycerin fatty acid monoester produced through esterification of one molecule of glycerin and one molecule of other kinds of fatty acids.

From the same viewpoint, the content of the glycerin fatty acid monoester in the glycerin fatty acid ester composition of the second embodiment is 50 to 100% by mass, preferably 60 to 99% by mass, more preferably 85 to 98% by mass.

The fatty acid to constitute the glycerin fatty acid ester contained in the glycerin fatty acid ester composition of the second embodiment includes previously-mentioned various kinds of fatty acids, and the carbon number of the fatty acid is, from the viewpoint of improving the processability, the low-heat generation property and the rupture resistance characteristics of the rubber composition for tire tread of the present invention, preferably 8 to 22, more preferably 12 to 18, even more preferably 14 to 18.

The glycerin fatty acid ester composition of the second embodiment is such that, in the fatty acid component that is a fatty acid-derived moiety in the glycerin fatty acid ester, the content of the fatty acid component whose amount is the largest among all the fatty acid components of the entire glycerin fatty acid ester is 10 to 90% by mass.

The glycerin fatty acid ester contains a glycerin component that is a glycerin-derived moiety, and a fatty acid component that is a fatty acid-derived moiety (a moiety represented by "RCOO-", where R represents a hydrocarbon group of a fatty acid component). In one molecule of each glycerin fatty acid ester, a monoester of a glycerin fatty acid ester has one fatty acid component ("RCOO-"), a diester thereof has two such components, and a triester has three such components.

As previously described, regarding the fatty acid to be a raw material for the glycerin fatty acid ester, every fatty acid that is the same in point of the steric configuration and the bonding state thereof in addition to the alkyl carbon number, that is, every stereoisomer is considered to be one component. Accordingly, fatty acids having the same carbon number but differing in the molecular structure are considered to be different fatty acids.

Given the situation as above, all the fatty acid components in all the glycerin fatty acid esters contained in the glycerin fatty acid ester composition of the second embodiment are classified, and when the content of the fatty acid component whose amount is the largest in all the fatty acid components is 10 to 90% by mass, then the rubber composition for tire tread of the type of the present invention can have improved processability, low-heat generation property and rupture resistance characteristics.

From the same viewpoint, the content of the fatty acid component whose amount is the largest among all the fatty acid components is preferably 15 to 80% by mass, more preferably 20 to 70% by mass, even more preferably 30 to 60% by mass.

The kind and the amount of the fatty acid component in the glycerin fatty acid ester contained in the glycerin fatty acid ester composition of the second embodiment can be confirmed through NMR measurement of the glycerin fatty acid ester composition.

The kind and the amount of the fatty acid component in the glycerin fatty acid ester can also be calculated from the molecular weight of the fatty acid used in producing the glycerin fatty acid ester, and the calculation results using the molecular weight of the fatty acid component to be determined through measurement and the calculation results using the molecular weight of the fatty acid of a raw material are closely related to each other.

In all the fatty acid components in the entire glycerin fatty acid ester contained in the glycerin fatty acid ester composition of the second embodiment, preferably, one of the fatty acid component whose amount is the largest and the fatty acid component whose amount is the second-largest is a fatty acid component having 16 carbon atoms and the other is a fatty acid component having 18 carbon atoms. Having such a constitution, the rubber composition for tire tread of the present invention can secure improved processability, low-heat generation property and rupture resistance characteristics.

Also from the same viewpoint, the ratio by mass of the fatty acid component having 16 carbon atoms to the fatty acid having 18 carbon atoms is preferably 90/10 to 10/90, more preferably 80/20 to 20/80, even more preferably 75/25 to 25/75.

[Fatty Acid Metal Salt]

Preferably, the rubber composition for tire tread of the present invention contains a fatty acid metal salt.

When the rubber composition for tire tread contains a fatty acid metal salt, the tread produced from the rubber composition for tire tread can have improved rupture resistance characteristics.

The melting point of the fatty acid metal salt is preferably 115°C or lower, more preferably 110°C or lower, even more preferably 105°C or lower. When the melting point is 115°C or lower, the fatty acid metal salt can dissolve in kneading and can readily disperse in the rubber composition and therefore can more effectively improve the rupture resistance characteristics of tire tread.

The fatty acid metal salt is not specifically limited, and includes fatty acid sodium salts, fatty acid potassium salts and fatty acid zinc salts. The fatty acid to constitute the fatty acid metal salt may be monobasic or dibasic or more. The fatty acid of the fatty acid metal salt preferably includes oleic acid and palmitic acid, and for example, the salt preferably includes zinc oleate and zinc palmitate.

The fatty acid metal salt may be a commercially-available one, and examples thereof include "Actiplast PP" (trademark) available from LANXESS Corporation.

The content of the fatty acid metal salt in the rubber composition for tire tread is, from the viewpoint of improving rupture resistance characteristics of tread, preferably 0.1 to 5 parts by mass per 100 parts by mass of the rubber component therein, more preferably 1 to 4 parts by mass.

(Various Components)

The rubber composition for tire tread of the present invention may optionally contain various components generally used in the art of rubber industry, such as a vulcanizing agent, a vulcanization accelerator, zinc oxide, stearic acid and an antiaging agent, in addition to the rubber component containing a natural rubber and the modified conjugated dienic polymer specific to the present invention, silica and a glycerin fatty acid ester composition, as mixed therein within a range not detracting from the object of the present invention. Commercially-available products are usable for such various components. The rubber composition can be prepared by mixing a rubber component, a filler and other optionally selected various components, then kneading them in a closed kneading apparatus such as a Banbury mixer, an internal mixer or an intensive mixer, or a non-closed kneading apparatus such as a roll, and thereafter heating and extruding the resultant mixture.

<Tire>

The tire of the present invention uses the rubber composition for tire tread of the present invention as a tread thereof.

The tire of the present invention is excellent in a balance of rolling resistance reduction, abrasion resistance, tear resistance and cut resistance, and is therefore especially favorable as a tire for heavy load. Here, a tire for heavy load includes tires for trucks and buses, off-road tires (tires for construction vehicles, tires for mine vehicles), and tires for small-size trucks (light trucks).

The gas to be charged in the tire of the present invention may be ordinary air or air having a varied oxygen partial pressure, and further includes an inert gas such as nitrogen, argon and helium.

The tire of the present invention is not specifically limited except that it uses the rubber composition for tire tread of the present invention as the tread thereof, and can be produced according to an ordinary method. For example, the rubber composition for tire tread of the present invention is extrude and worked into a member for tread, and stuck and molded on a tire molding machine according to an ordinary method to give a green tire. The green tire is pressurized under heat in a vulcanization machine to give a tire.

Examples

Hereinunder the present invention is described in more detail with reference to Examples given below, but the present invention should not be whatsoever restricted by these Examples.

<Preparation of Rubber Composition>

Using the rubber component, the filler and the glycerin fatty acid ester compound mentioned below, rubber compositions each having a formulation shown in Tables 3 and 4 were prepared according to an ordinary method.

[Rubber Component]

1. Production of partially-deproteinized natural rubber ("natural rubber" in Table 4)
A natural rubber latex (CT-1) was, after 0.4 mass% ammonia had been added thereto, concentrated through centrifugation at a rotation number of 7,500 rpm for 15 minutes, using a latex separator SLP-3000 (manufactured by Saito Separator Limited). Further, the concentrated latex was centrifuged at a rotation number of 7,500 rpm for 15 minutes. The resultant latex concentrate was diluted to have a solid content of about 20%, and then formic acid was added thereto. This was left as such overnight, and solidified, and the resultant rubber component was dried at 110°C for 210 minutes to give a partially deproteinized natural rubber. The total nitrogen content of the resultant natural rubber was measured according to the method mentioned below, and was 0.15% by mass.
Here, for measuring the total nitrogen content, the latex was solidified with acid and dried, and the mass of the resultant solid fraction (sample) was measured accurately, and the nitrogen content therein was determined according to a Kjeldahl method in terms of % by mass in 100% by mass of the solid fraction. The Kjeldahl method is an analytical method for nitrogen, in which the sample is oxidized and decomposed with a hot concentrated sulfuric acid and the formed ammonium ion is quantitatively determined.

2. Unmodified polybutadiene rubber ("unmodified BR" in Table 4)

As an unmodified polybutadiene rubber, a solution polymerization BR, "JSR BR01", a trade name available from JSR Corporation was used.

3. Production of modified polybutadiene rubber ("modified BR" in Table 4)

283 g of cyclohexane, 50 g of 1,3-butadiene, 0.0057 mmol of 2,2-ditetrahydrofurylpropane and 0.513 mmol of hexamethyleneimine were put into a pressure-tight glass container of about 900 mL, which had been dried and purged with nitrogen, and further, 0.57 mmol of n-butylhthium (BuLi) was added thereto and then polymerized for 4.5 hours in a hot water bath at 50°C equipped with a stirrer. The polymerization conversion at this time was almost 100%. Next, as a modifier (coupling agent), 0.100 mmol of tin tetrachloride was rapidly added to the polymerization system, and further stirred at 50°C for 30 minutes for modification reaction. Subsequently, 0.5 mL of an isopropanol solution of 2,6-dit-butyl-p-cresol (BHT) (BHT concentration: 5% by mass) was added to the polymerization system to stop the reaction, and further, according to an ordinary method, this was dried to give a modified polybutadiene rubber (modified BR). The resultant modified BR had a vinyl bond amount of 14% in the butadiene moiety therein, had a glass transition temperature (Tg) of -95°C and had a coupling efficiency of 65%.
From the integration ratio of the 1H-NMR spectrum of the resultant modified BR, the vinyl bond amount in the butadiene moiety was calculated; from the ratio of the peak area on the high molecular weight side based on the total area of the molecular weight distribution curve in gel permeation chromatography (GPC), the coupling ratio was calculated; and from the inflection point on the DSC curve, the glass transition temperature was determined.

(Filler)

1. Production of carbon black

According to the production condition shown in Table 2, carbon blacks 1 and 2 were produced.
As the fuel, Bunker A having a specific gravity of 0.8622 (15°C/4°C) was used, and as the raw material oil, a heavy oil having the property shown in Table 1 was used. The nitrogen adsorption specific surface area ($N_2SA$), the hydrogen release rate and the DBP absorption amount of the resultant carbon blacks 1 and 2 are shown in Table 2.

The nitrogen adsorption specific surface area ($N_2$SA) was measured according to JIS K 6217-2:2001.

For the hydrogen release rate, (1) the carbon black sample was dried in a constant temperature drier at 105°C for 1 hour, and cooled in a desiccator to room temperature (23°C), (2) about 10 mg of the sample was accurately metered in a tin-made tubular sample vessel, and sealed up under pressure, and (3) using a gas chromatography apparatus ("GC-9A" manufactured by Shimadzu Corporation), this was heated in an argon stream atmosphere at 2,000°C for 15 minutes and the hydrogen gas generation amount during this was measured, and the hydrogen gas generation amount was expressed as % by mass.

The DBP absorption amount was measured according to JIS K 6217-4:2001.

Table 1

| | | |
|---|---|---|
| Specific Gravity (JIS K2249) (15/4°C) | | 1.1319 |
| Kinematic Viscosity (JIS K2283) (mm$^2$/s at 50°C) | | 26.7 |
| Water Content (JIS K2275) (%) | | 0.5 |
| Residual Carbon (JIS K2210) (%) | | 11.6 |
| Sulfur Content (JIS K2213) (%) | | 0.4 |
| Carbon Content (%) | | 90.1 |
| Hydrogen Content (%) | | 5.4 |
| BMC I[*1] | | 160 |
| Distillation Characteristics (°C) | I.B.P.[*2] | 188 |
| | 10% fraction point | 234 |
| | 30% fraction point | 291 |
| | 50% fraction point | 360 |
| *1 BMC I: Bureau of Mines Correlation Index<br>*2 I.B.P.: Initial Boiling Point | | |

Table 2

| Kind of Carbon Black | | 1 | 2 |
|---|---|---|---|
| Production Condition | Production Air Amount (kg/hr) | 1412 | 1622 |
| | Air Temperature (°C) | 705 | 732 |
| | Fuel Introduction Amount (kg/hr) | 640 | 775 |
| | Raw Material Introduction Amount (kg/hr) | 312 | 422 |
| | Raw Material Preheating Temperature (°C) | 301 | 218 |
| Characteristics of Carbon Black | Nitrogen Adsorption Specific Surface Area ($N_2$SA) (m$^2$/g) | 78 | 92 |
| | Hydrogen Release Rate (% by mass) | 0.27 | 0.43 |
| | DBP Absorption Amount (cm$^3$/100 g) | 127 | 135 |

2. Silica

As silica, Nipsil AQ available from Tosoh Silica Corporation was used.

[Glycerin Fatty Acid Ester Composition]

1. Glycerin fatty acid ester composition 1

According to the method described in Production Example 4 in WO2014/098155, a glycerin fatty acid ester composition 1 was prepared.

In the glycerin fatty acid ester composition 1, the glycerin fatty acid monoester content was 64% by mass, the glycerin fatty acid diester content was 34% by mass, the glycerin fatty acid triester content was 1% by mass, and the glycerin content was 1% by mass.

99% by mass of the constituent fatty acid was palmitic acid, and 1% by mass was other fatty acids.

2. Glycerin fatty acid ester composition 2

The glycerin fatty acid ester 1 was processed for molecular distillation to prepare a glycerin fatty acid ester composition 2.

In the glycerin fatty acid ester composition 2, the glycerin fatty acid monoester content was 97% by mass, 99% by mass of the constituent fatty acid was palmitic acid, and 1% by mass was other fatty acids.

[Details of Components in Table 3]

In Table 3, details of the silane coupling agent, the fatty acid metal salt, the antiaging agent 6C and the vulcanization accelerator CZ are as follows.

Silane coupling agent: ABC-856 available from Shin-Etsu Chemical Co., Ltd.
Fatty acid metal salt: Actiplast PP (melting point 101°C) available from LANXESS Corporation
Antiaging agent 6C: N-(1,3-dimethylbutyl)-N'-phenyl-p-phenylenediamine
Vulcanization accelerator CZ: N-cyclohexyl-2-benzothiazolylsulfenamide

<Production and Evaluation of Tires>

The resultant rubber composition was applied to a tread rubber, and a tire for heavy load having a size of 11R22.5 was produced experimentally according to an ordinary method, and the tire was evaluated in point of rolling resistance, abrasion resistance, tear resistance and cut resistance. The result is shown in Table 4.

(1) Abrasion resistance.

The experimentally-produced tire was fixed to a vehicle, the vehicle was driven for 40,000 km, and the groove loss after the driving was measured. Taking the reciprocal number of the loss value of the tire of Comparative Example 2 as 100, the measured value was converted into index expression. The larger value means more excellent abrasion resistance.

$$\text{Abrasion Resistance Index} = [(\text{loss value of tire of Comparative Example 2})/(\text{loss value of tested tire})] \times 100$$

(2) Rolling Resistance

Measured according to JIS D 4234:2009. The measured rolling resistance value was converted into index expression according to the following formula. The larger value means a larger rolling resistance. Namely, the smaller value indicates more excellent fuel efficiency.

$$\text{Rolling Resistance Index} = [(\text{rolling resistance value of tested tire})/(\text{rolling resistance value of tire of Comparative Example 2}] \times 100$$

(3) Cut Resistance

Dynamic elastic modulus E' was used for the index of Cut Resistance.

Using a Spectrometer (Dynamic Viscoelastometry Tester) manufactured by Ueshima, the dynamic elastic modulus E' was measured at 52 HZ frequency, 10% initial strain, 6°C measured temperature, and 1% dynamic strain. The values of the dynamic elastic modulus E' of Comparative Example 1 or 2 were expressed as 100, and the following equation was used to express it exponentially.

In the dynamic elastic modulus E', the larger the index value, the higher the dynamic elastic modulus E'. The larger index value means more excellent cut resistance of the tire.

$$\text{Dynamic elastic modulus E' Iindex} = [(\text{Dynamic elastic modulus E' of the vulcanized rubber composition of the test}) / (\text{Dynamic elastic modulus E' of the vulcanized rubber composition of Comparative Example 1 or 2})] \times 100$$

(4) Tear Resistance

A tire to be tested was fixed to the drive shaft of a truck, the truck was driven for 100,000 km, and the total length of tear after the driving was measured. Taking the reciprocal number of the total tear length in Comparative Example 2 as 100, the measured value was converted into index expression. The larger index value means the smaller number of flaws, thereby exhibiting more excellent tear resistance.

$$\text{Tear Resistance Index} = [(\text{total tear length of tire of Comparative Example 2})/(\text{total tear length of tested tire})] \times 100$$

(5) Comprehensive Evaluation

From the abrasion resistance index, the rolling resistance index, the cut resistance index, and the tear resistance index, the comprehensive evaluation index was calculated. Even though each evaluation result is worse by 10% or so than in Comparative Example 2, the tested sample is accepted to fall within an allowable range so far as the comprehensive evaluation is better.

The comprehensive evaluation index can be calculated as a total of the abrasion resistance improvement degree over Comparative Example 2, the rolling resistance improvement degree over Comparative Example 2, the cut resistance improvement degree over Comparative Example 2 and the tear resistance improvement degree over Comparative Example 2, and is specifically calculated according to the following expression.

$$\text{Comprehensive Evaluation Index} = (\text{abrasion resistance index} - 100) + (100 - \text{rolling resistance index}) + (\text{cut resistance index} - 100) + (\text{tear resistance index} - 100)$$

For example, the comprehensive evaluation index in Example 1 is calculated as (124-100)+(100-96)+(108-100)+(108-100)=24+4+8+8=44, and the comprehensive evaluation index in Example 7 is calculated as (149-100)+(100-100)+(114-100)+(93-100)=49+0+14-7=56.

Table 3

| Formulation of Rubber Composition | |
|---|---|
| Rubber Component | kind and amount (part by mass) shown in Table 4 |
| Filler | kind and amount (part by mass) shown in Table 4 |
| Glycerin Fatty Acid Ester Composition | kind and amount (part by mass) shown in Table 4 |
| Silane Coupling Agent | 0.5 parts by mass |
| Fatty Acid Metal Salt | 2.3 parts by mass |
| N'-(1,3-dimethylbutylidene) -3-hydroxy-2-naphthohydrazine | 1.5 parts by mass |
| Stearic Acid | 2.0 parts by mass |
| Antiaging Agent 6C | 2.0 parts by mass |
| Zinc Oxide | 3.5 parts by mass |
| Vulcanization Accelerator CZ | 1.5 parts by mass |

(continued)

| Formulation of Rubber Composition | |
|---|---|
| Sulfur | 1.1 parts by mass |

Table 4

| | | | Comparative Example 1 | Comparative Example 2 | Example 1 | Example 2 | Example 3 | Example 4 | Example 5 |
|---|---|---|---|---|---|---|---|---|---|
| Rubber Component | Natural Rubber | part | 70 | 70 | 70 | 70 | 70 | 70 | 70 |
| | Unmodified BR | part | 30 | 30 | - | - | - | - | - |
| | Modified BR | part | - | - | 30 | 30 | 30 | 30 | 30 |
| Filler | Carbon 1 | part | 40 | 36 | 40 | 40 | - | - | - |
| | Carbon 2 | part | - | - | - | - | 40 | 40 | 45 |
| | Silica | part | 18 | 16 | 15 | 15 | 15 | 15 | 15 |
| | Silica/All Fillers | % | 31.0 | 31.0 | 27.3 | 27.3 | 27.3 | 27.3 | 25.0 |
| | Total | part | 58.0 | 52.0 | 55.0 | 55.0 | 55.0 | 55.0 | 60.0 |
| Glycerin Fatty Acid Ester Composition 1 | | part | - | - | 3 | - | 3 | - | 3 |
| Glycerin Fatty Acid Ester Composition 2 | | part | - | - | - | 3 | - | 3 | - |
| Evaluation | Abrasion Resistance | - | 117 | 100 | 124 | 124 | 142 | 142 | 163 |
| | Rolling Resistance | - | 105 | 100 | 96 | 96 | 98 | 98 | 103 |
| | Cut Resistance | - | 112 | 100 | 108 | 108 | 113 | 113 | 124 |
| | Tear Resistance | - | 110 | 100 | 108 | 130 | 113 | 136 | 117 |
| | Comprehensive Evaluation | - | 34 | 0 | 44 | 66 | 71 | 93 | 102 |

| | | | Example 6 | Example 7 | Example 8 | Example 9 | Example 10 | Example 11 | Example 12 | Example 13 |
|---|---|---|---|---|---|---|---|---|---|---|
| Rubber Component | Natural Rubber | part | 70 | 70 | 70 | 70 | 80 | 60 | 70 | 70 |
| | Modified BR | part | 30 | 30 | 30 | 30 | 20 | 40 | 30 | 30 |
| Filler | Carbon 2 | part | 45 | 45 | 40 | 40 | 40 | 40 | 47 | 38 |
| | Silica | part | 10 | 8 | 15 | 15 | 15 | 15 | 8 | 15 |
| | Silica/All Fillers | % | 18.2 | 15.1 | 27.3 | 27.3 | 27.3 | 27.3 | 14.5 | 28.3 |
| | Total | part | 55.0 | 53.0 | 55.0 | 55.0 | 55.0 | 55.0 | 55.0 | 53.0 |
| Glycerin Fatty Acid Ester Composition 1 | | part | 3 | 3 | 1 | 5 | 3 | 3 | 3 | 3 |

(continued)

| Evaluation | | Example 6 | Example 7 | Example 8 | Example 9 | Example 10 | Example 11 | Example 12 | Example 13 |
|---|---|---|---|---|---|---|---|---|---|
| | Abrasion Resistance | - | 153 | 149 | 142 | 142 | 138 | 146 | 158 | 133 |
| | Rolling Resistance | - | 101 | 100 | 98 | 104 | 103 | 96 | 102 | 96 |
| | Cut Resistance | - | 117 | 114 | 113 | 111 | 114 | 112 | 119 | 109 |
| | Tear Resistance | - | 101 | 93 | 124 | 138 | 136 | 91 | 95 | 112 |
| | Comprehensive Evaluation | - | 70 | 56 | 81 | 87 | 85 | 53 | 70 | 58 |

As obvious from Table 4, it is known that the tires of Examples 1 to 13 are excellent in a balance of rolling resistance reduction, abrasion resistance, tear resistance and cut resistance as compared with the tires of Comparative Examples.

Industrial Applicability

Using the rubber composition for tire tread of the present invention, treads excellent in a balance of rolling resistance reduction, abrasion resistance, tear resistance and cut resistance can be obtained, and the treads are favorably used for tread members of various tires for passenger cars, minivans, light trucks and heavy load vehicles {for trucks, buses, off-the-road tires (mine vehicles, construction vehicles, small-size trucks)}, especially for tread members for pneumatic tires for heavy load vehicles {for trucks, buses, off-the-road tires (for mine vehicles, construction vehicles, small-size trucks)}.

**Claims**

1. A rubber composition for tire tread, comprising:

   a rubber component containing from 60 to 80% by mass of a natural rubber and from 20 to 40% by mass of a modified conjugated dienic polymer having one or more functional groups each having an atom other than carbon and hydrogen,
   a filler in an amount of 35 to 70 parts by mass per 100 parts by mass of the rubber component, and
   a glycerin fatty acid ester composition in an amount of 0.1 to 10 parts by mass per 100 parts by mass of the rubber component, wherein:
   the content of silica in the filler is from 3 to 30% by mass.

2. The rubber composition for tire tread according to claim 1, further comprising a fatty acid metal salt in an amount of 0.1 to 5 parts by mass per 100 parts by mass of the rubber component.

3. The rubber composition for tire tread according to claim 1 or 2, wherein the filler contains a carbon black having a dibutyl phthalate absorption amount (DBP absorption amount) of 40 to 180 $cm^3$/100 g, a nitrogen adsorption specific surface area ($N_2SA$) of 40 to 95 $m^2$/g, a toluene extract light transmittance of 90% or more and a hydrogen release rate of 0.37% by mass or more.

4. The rubber composition for tire tread according to any one of claims 1 to 3, wherein the glycerin fatty acid ester composition contains a glycerin fatty acid monoester and a glycerin fatty acid diester that are esters of glycerin and a fatty acid having 8 to 28 carbon atoms, and the glycerin fatty acid monoester content is 85% by mass or less.

5. The rubber composition for tire tread according to any one of claims 1 to 3, wherein the glycerin fatty acid ester composition contains a glycerin fatty acid ester that is an ester of glycerin and two kinds of fatty acids, and in the fatty acid component of a fatty acid-derived site of the glycerin fatty acid, the content of the fatty acid component that accounts for the largest amount among all the fatty acid components of the entire glycerin fatty acid ester is from 10 to 90% by mass, and the content of the glycerin fatty acid monoester in the glycerin fatty acid ester composition is from 50 to 100% by mass.

6. The rubber composition for tire tread according to any one of claims 1 to 5, wherein the modified conjugated dienic polymer having one or more functional groups each having an atom other than carbon and hydrogen is a modified conjugated dienic polymer having one or more functional groups each having at least one of nitrogen, oxygen and silicon atoms.

7. A tire using a rubber composition for tire tread of any one of claims 1 to 6 as a tread thereof.

**Patentansprüche**

1. Kautschukzusammensetzung für Reifenprofil, umfassend:

   eine Kautschukkomponente, die 60 bis 80 Masse-% eines Naturkautschuks und 20 bis 40 Masse-% eines modifizierten, konjugierten, dienischen Polymers enthält, das eine oder mehrere funktionelle Gruppen aufweist, die jeweils ein Atom aufweisen, das anders als Kohlenstoff und Wasserstoff ist,

einen Füllstoff in einer Menge von 35 bis 70 Masseteilen pro 100 Masseteilen der Kautschukkomponente, und eine Glycerinfettsäureesterzusammensetzung in einer Menge von 0,1 bis 10 Masseteilen pro 100 Masseteilen der Kautschukkomponente, wobei:

der Gehalt an Siliciumdioxid in dem Füllstoff 3 bis 30 Masse-% beträgt.

2. Kautschukzusammensetzung für Reifenprofil nach Anspruch 1, ferner ein Fettsäuremetallsalz in einer Menge von 0,1 bis 5 Masseteilen pro 100 Masseteilen der Kautschukkomponente umfassend.

3. Kautschukzusammensetzung für Reifenprofil nach Anspruch 1 oder 2, wobei der Füllstoff einen Ruß enthält, der eine Dibutylphthalatabsorptionsmenge (DBPP-Absorptionsmenge) von 40 bis 180 cm$^3$/100 g, einen stickstoffadsorptionsspezifischen Oberflächenbereich (N$_2$Sa) von 40 bis 95 m$^2$/g, ein Toluolextrakt-Lichttransmissionsvermögen von 90 % oder mehr und eine Wasserstofffreisetzungsrate von 0,37 Masse-% oder mehr aufweist.

4. Kautschukzusammensetzung für Reifenprofil nach einem der Ansprüche 1 bis 3, wobei die Glycerinfettsäureesterzusammensetzung einen Glycerinfettsäuremonoester und einen Glycerinfettsäurediester enthält, die Ester von Glycerin und einer Fettsäure sind, die 8 bis 28 Kohlenstoffatome aufweist, und der Glycerinfettsäuremonoestergehalt 85 Masse-% oder weniger beträgt.

5. Kautschukzusammensetzung für Reifenprofil nach einem der Ansprüche 1 bis 3, wobei die Glycerinfettsäureesterzusammensetzung einen Glycerinfettsäureester enthält, der ein Ester von Glycerin und zwei Arten von Fettsäuren ist, und in der Fettsäurekomponente eines von Fettsäure abgeleiteten Orts der Glycerinfettsäure der Gehalt der Fettsäurekomponente der die größte Menge unter allen den Fettsäurekomponenten des gesamten Glycerinfettsäureesters darstellt, 10 bis 90 Masse-% ausmacht und der Gehalt des Glycerinfettsäuremonoesters in der Glycerinfettsäureesterzusammensetzung 50 bis 100 Masse-% beträgt.

6. Kautschukzusammensetzung für Reifenprofil nach einem der Ansprüche 1 bis 5, wobei das modifizierte, konjugierte, dienische Polymer, das eine oder mehrere funktionelle Gruppen aufweist, die jeweils ein Atom aufweisen, das anders als Kohlenstoff und Wasserstoff ist, ein modifiziertes, konjugiertes, dienisches Polymer ist, das eine oder mehrere funktionelle Gruppen aufweist, die jeweils mindestens eines von Stickstoff-, Sauerstoff- und Siliciumatomen aufweisen.

7. Reifen, bei dem eine Kautschukzusammensetzung für Reifenprofil nach einem der Ansprüche 1 bis 6 als Profil davon verwendet wird.

## Revendications

1. Composition de caoutchouc pour bande de roulement de pneumatique, comprenant :

un composant de caoutchouc contenant de 60 à 80 % en masse d'un caoutchouc naturel et de 20 à 40 % en masse d'un polymère diénique conjugué modifié ayant un ou plusieurs groupes fonctionnels ayant chacun un atome autre que le carbone et l'hydrogène,

une charge en une quantité de 35 à 70 parties en masse pour 100 parties en masse du composant de caoutchouc, et

une composition d'ester d'acide gras de glycérine en une quantité de 0,1 à 10 parties en masse pour 100 parties en masse du composant de caoutchouc, dans laquelle :

la teneur de la silice dans la charge est de 3 à 30 % en masse.

2. Composition de caoutchouc pour bande de roulement de pneumatique selon la revendication 1, comprenant en outre un sel de métal d'acide gras en une quantité de 0,1 à 5 parties en masse pour 100 parties en masse du composant de caoutchouc.

3. Composition de caoutchouc pour bande de roulement de pneumatique selon la revendication 1 ou 2, dans laquelle la charge contient un noir de carbone ayant une quantité d'absorption de phtalate de dibutyle (quantité d'absorption de DBP) de 40 à 180 cm$^3$/100 g, une surface spécifique d'adsorption d'azote (N$_2$SA) de 40 à 95 m$^2$/g, une transmittance de la lumière dans un extrait au toluène de 90 % ou plus et un taux de libération d'hydrogène de 0,37 % en masse ou plus.

4. Composition de caoutchouc pour bande de roulement de pneumatique selon l'une quelconque des revendications 1 à 3, dans laquelle la composition d'ester d'acide gras de glycérine contient un monoester d'acide gras de glycérine et un diester d'acide gras de glycérine qui sont des esters de glycérine et un acide gras ayant de 8 à 28 atomes de carbone, et la teneur du monoester d'acide gras de glycérine est de 85 % en masse ou moins.

5. Composition de caoutchouc pour bande de roulement de pneumatique selon l'une quelconque des revendications 1 à 3, dans laquelle la composition d'ester d'acide gras de glycérine contient un ester d'acide gras de glycérine qui est un ester de glycérine et deux types d'acides gras, et dans le composant d'acide gras d'un site dérivé d'acide gras de l'acide gras de glycérine, la teneur du composant d'acide gras qui compte pour la quantité la plus grande parmi tous les composants d'acide gras de l'ester d'acide gras de glycérine entier est de 10 à 90 % en masse, et la teneur du monoester d'acide gras de glycérine dans la composition d'ester d'acide gras de glycérine est de 50 à 100 % en masse.

6. Composition de caoutchouc pour bande de roulement de pneumatique selon l'une quelconque des revendications 1 à 5, dans laquelle le polymère diénique conjugué modifié ayant un ou plusieurs groupes fonctionnels ayant chacun un atome autre que le carbone et l'hydrogène est un polymère diénique conjugué modifié ayant un ou plusieurs groupes fonctionnels ayant chacun au moins l'un parmi les atomes d'azote, d'oxygène et de silicium.

7. Pneumatique utilisant une composition de caoutchouc pour bande de roulement de pneumatique selon l'une quelconque des revendication 1 à 6 comme bande de roulement de celui-ci.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8225604 A
- JP 8231658 A
- JP 2005041975 A
- JP 2013155256 A
- WO 2014098155 A